# FASCICULE DE BREVET EUROPEEN

(11) **EP 3 377 458 B1**
(45) Date de publication et mention de la délivrance du brevet: **29.09.2021**
(21) Numéro de dépôt: 16813000.3
(22) Date de dépôt: 17.11.2016
(51) Int. Cl.: C04B 28/02, C04B 28/04, C04B 38/10, C04B 22/00, C04B 111/28, C04B 111/52

(54) **MOUSSE MINERALE ULTRA-LÉGÈRE ET SON PROCEDE DE FABRICATION**
ULTRALEICHTER MINERALISCHER SCHAUM UND HERSTELLUNGSVERFAHREN DAFÜR
ULTRALIGHT MINERAL FOAM AND MANUFACTURE METHOD THEREOF

(30) Priorité: 17.11.2015 FR 1561057
(43) Date de publication de la demande: 26.09.2018
(73) Titulaire: Holcim Technology Ltd, 6300 Zug (CH)
(72) Inventeur: BLACHIER, Christian, 38291 Saint Quentin Fallavier (FR); CHAUMILLIAT, Christine, 38291 Saint Quentin Fallavier (FR); LOMBOIS-BURGER, Hélène, 38291 Saint Quentin Fallavier (FR); SABIO, Serge, 38291 Saint Quentin Fallavier (FR)
(74) Mandataire: Regimbeau
(86) Numéro de dépôt international: PCT/FR2016/053000
(87) Numéro de publication internationale: WO 2017/085416

(56) Documents cités:
- WO-A1-2010/026155
- WO-A1-2013/150148
- WO-A2-2011/086333
- FR-A1- 2 958 931
- US-A- 5 696 174

## Description

La présente invention se rapporte à une mousse minérale ultralégère à base de ciment, à un procédé de réalisation de cette mousse, ainsi qu'à des éléments de construction comprenant cette mousse.

De manière générale, la mousse minérale, en particulier la mousse de ciment, est très avantageuse pour de nombreuses applications en raison de ses propriétés comme l'isolation thermique, l'isolation acoustique, la durabilité, la résistance au feu et sa facilité de mise en oeuvre.

La mousse minérale désigne un matériau sous forme d'une mousse. Ce matériau est plus léger que le béton traditionnel à cause des pores ou espaces vides qu'il comprend. Ces pores ou espaces vides sont dus à la présence d'air dans la mousse minérale et peuvent se présenter sous forme de bulles. Par mousse ultralégère, on entend une mousse dont la densité à l'état sec est généralement comprise entre 20 et 300 kg/m³.

Lorsqu'un élément en mousse minérale est coulé, celui-ci peut s'affaisser par manque de stabilité de la mousse minérale par exemple, dès sa mise en place ou encore avant son durcissement complet. Ces problèmes d'affaissement de la mousse peuvent être dus à des phénomènes de coalescence, de mûrissement d'Ostwald, de pression hydrostatique ou de drainage, celui-ci étant accru notamment pour des éléments de grande hauteur.

La difficulté dans la réalisation des mousses minérales est donc de fabriquer une mousse stable palliant ces problèmes d'affaissement. Or, les techniques connues pour permettre d'obtenir une mousse suffisamment stable font appel à des mélanges de composés cimentaires comprenant de nombreux additifs et dont la réalisation est difficile et coûteuse.

Ainsi il a déjà été proposé dans le brevet US 5,696,174 l'utilisation simultanée de composés cationiques (I) et anioniques (II) pour la réalisation de mousses. De telles mousses cimentaires comprennent du stéarate d'ammonium comme composé anionique et un composé cationique dénommé Arquad T.

La demande WO 2013/150148 décrit des mousses à base de ciment comprenant divers adjuvants. Ces mousses peuvent comprendre de l'aluminate de calcium pour permettre une prise rapide ou des particules minérales fines en addition d'un ciment Portland. Les densités les plus faibles atteintes par ce procédé sont néanmoins le plus souvent limitées à 100 kg/m³.

La demande de brevet WO 2011/086333 décrit des mousses minérales à base de ciments alumineux. La forte réactivité de ces ciments permet certes de former des mousses minérales stables et homogènes, mais le coût élevé de ces ciments ainsi que leur forte réactivité font que cette invention est dans de très nombreux cas difficile à utiliser par les utilisateurs.

Afin de répondre aux exigences des utilisateurs, il est devenu nécessaire de trouver un moyen pour réaliser une mousse minérale ultralégère, à haute stabilité dont la réalisation est simple et peu onéreuse.

Aussi le problème que se propose de résoudre l'invention est de trouver une formulation de mousse minérale ultra légère stable, qui ne s'affaisse pas lorsque la mousse est coulée en vertical et dont la réalisation soit relativement aisée et peu onéreuse.

L'invention se rapporte à un procédé de fabrication d'une mousse minérale comprenant les étapes suivantes :
(i) préparer indépendamment une mousse aqueuse et un coulis de ciment, le coulis de ciment comprenant de l'eau E, un ciment C, un agent réducteur d'eau, un sel de calcium soluble dans l'eau, un sel de silicate soluble dans l'eau, le rapport molaire calcium / silicium étant compris de 0,7 à 1,7 et le rapport massique E/C étant compris de 0,25 à 0,40, et étant entendu que la concentration en ions calcium est comprise entre 0,03 et 0,97%, pourcentage exprimé en masse par rapport à la masse de ciment C et que la concentration en ions silicate est comprise entre 0,04 et 1,67%, pourcentage exprimé en masse par rapport à la masse de ciment C;
(ii) mettre en contact le coulis de ciment obtenu avec la mousse aqueuse pour obtenir un coulis de ciment moussé; et
(iii) mettre en forme le coulis de ciment moussé obtenu à l'étape (ii) et laisser la prise s'effectuer.

De préférence, l'eau E est l'eau du réseau urbain, ou de l'eau prélevée en milieu naturel.

Un ciment C est un liant hydraulique comprenant une proportion au moins égale à 50% en masse d'oxyde de calcium (CaO) et de dioxyde de silicium (SiO₂). Un ciment peut donc comprendre d'autres composés en sus du CaO et du SiO₂, et en particulier comprendre du clinker Portland, du laitier, de la fumée de silice, des pouzzolanes (naturelles et naturelles calcinées), des cendres volantes (siliceuse et calcique), du schiste et/ou du calcaire.

Le ciment C mis en œuvre selon le procédé de l'invention peut être tout type de ciment quelle que soit sa composition chimique, et en particulier quelle que soit sa teneur en alcalins. Ainsi, il est avantageux selon ce procédé de l'invention de ne pas avoir à sélectionner un ciment en particulier. Avantageusement, le ciment C utilisé pour réaliser l'invention est de préférence choisi parmi les ciments disponibles sur le marché.

Avantageusement, le ciment C utilisé dans le coulis de ciment mis en oeuvre selon le procédé de l'invention comprend plus de 70% en masse, avantageusement plus de 80% en masse, plus avantageusement plus de 90% en masse de clinker Portland.

Ce ciment C est mis en œuvre selon le procédé de l'invention en présence d'une quantité d'eau E spécifique dans le coulis, caractérisée par le rapport massique E/C.

De préférence le rapport E/C du coulis de ciment est compris de 0,25 à 0,38, plus préférentiellement de 0,28 à 0,35, exprimé en masse.

Le ciment C mis en oeuvre selon le procédé de l'invention pour réaliser les mousses minérales peut être sélectionné parmi les ciments décrits dans la norme NF-EN197-1 d'avril 2012, en particulier les ciments de type CEM I, CEM II, CEM III, CEM IV, ou CEM V. Selon une variante, le ciment C peut aussi être un ciment composé comprenant un mélange de CEM I et de matériaux pouzzolaniques et/ou de calcaire préalablement broyés, ce ciment étant composé directement lors de la préparation du coulis de ciment selon le procédé de l'invention. Ce ciment peut être composé en utilisant des additions minérales, telles que décrites ci-après dans la description.

De préférence, le ciment C mis en œuvre selon le procédé de l'invention pour réaliser les mousses minérales est un ciment de type CEM I.

Selon un mode particulier de réalisation, le ciment pouvant convenir pour être utilisé selon la présente invention présente une surface spécifique Blaine comprise de 3 000 à 10 000 cm²/g, de préférence comprise de 3 500 à 6 000 cm²/g.

Le coulis de ciment utilisé dans le procédé selon l'invention peut avantageusement comprendre un agent réducteur d'eau du type plastifiant ou superplastifiant. Un agent réducteur d'eau permet de réduire d'environ 10 à 15% en masse la quantité d'eau de gâchage pour un temps d'ouvrabilité donné. A titre d'exemple d'agent réducteur d'eau, on peut citer les lignosulphonates, les acides hydroxycarboxyliques, les carbohydrates, et autres composés organiques spécifiques, comme par exemple le glycérol, l'alcool polyvinylique, l'aluminométhyl siliconate de sodium, l'acide sulfanilique et la caséine (voir Concrete Admixtures Handbook, Properties Science and Technology, V.S. Ramachandran, Noyes Publications, 1984). Les superplastifiants appartiennent à la nouvelle génération des agents réducteurs d'eau et permettent de réduire d'environ 30% en masse la quantité d'eau de gâchage pour un temps d'ouvrabilité donné. A titre d'exemple de superplastifiant, on peut citer les superplastifiants PCP sans agent anti-mousse, les diphosphonates POE, les polyphosphates POE. On entend entre autre par le terme « PCP », ou «polycarboxylate polyoxyde», selon la présente invention un copolymère des acides acryliques ou acides méthacryliques, et de leurs esters de poly(oxyde d'éthylène) (POE).

De préférence, le coulis de ciment permettant de réaliser la mousse minérale selon l'invention comprend de 0,05 à 1,00%, plus préférentiellement de 0,05 à 0,5% d'un agent réducteur d'eau, d'un plastifiant ou d'un superplastifiant, pourcentage exprimé en masse sèche par rapport à la masse ciment C.

De préférence, l'agent réducteur d'eau du type plastifiant ou superplastifiant ne comprend pas d'agent anti-mousse.

Le coulis de ciment ou la mousse aqueuse peuvent également comprendre de 0,05 à 2,5% d'un accélérateur de la prise du ciment, pourcentage exprimé en masse sèche par rapport au ciment C.

Le coulis de ciment préparé à l'étape (i) du procédé selon l'invention comprend un sel de calcium soluble dans l'eau.

Le sel de calcium soluble dans l'eau peut se présenter sous forme de poudre ou de liquide, sous forme anhydre ou hydratée.

De préférence le sel de calcium soluble dans l'eau présente une solubilité dans l'eau à 20°C supérieure à 2 g/100 mL.

De préférence la concentration en ions calcium dans le coulis de ciment est comprise de 0,05 à 0,60%, plus préférentiellement de 0,05 à 0,45% pourcentage exprimé en masse par rapport à la masse de ciment C.

De préférence, le sel de calcium soluble dans l'eau est choisi parmi le chlorure de calcium, le nitrate de calcium, le formate de calcium, l'acétate de calcium, le chlorate de calcium, le bromure de calcium, le lactate de calcium, le nitrite de calcium, le propionate de calcium, l'hydrogenocarbonate de calcium, l'iodure de calcium et leurs mélanges.

Le coulis de ciment préparé à l'étape (i) du procédé selon l'invention comprend un sel de silicate soluble dans l'eau.

De préférence le sel de silicate soluble dans l'eau peut se présenter sous forme de poudre ou de liquide, sous forme anhydre ou hydratée.

De préférence le sel de silicate soluble dans l'eau présente une solubilité dans l'eau à 20°C supérieure à 2 g/100mL.

De préférence la concentration en ions silicate dans le coulis de ciment est comprise de 0,11 à 1,00%, plus préférentiellement de 0,11 à 0,66%, pourcentage exprimé en masse par rapport à la masse de ciment C.

De préférence, le sel de silicate soluble dans l'eau est choisi parmi la famille des silicates: metasilicate, orthosilicate, pyrosilicate de sodium, la famille des silicates: metasilicate, orthosilicate, pyrosilicate de potassium, l'acide silicique et leurs mélanges. Les silicates alcalins solubles sont en général décrits par la formule generale suivante: M₂O-nSiO₂ avec M correspondant à Na ou à K et n est le rapport molaire qui représente le nombre de moles de moles de dioxyde de silice (SiO₂) par mole d'oxyde métallique (M₂O).

De préférence, le rapport molaire calcium / silicium est compris de 0,8 à 1,6, plus préférentiellement compris de 0,8 à 1,5.

D'autres additifs peuvent être ajoutés soit dans le coulis de ciment soit dans la mousse aqueuse. De tels additifs peuvent par exemple être un agent épaississant, un agent viscosant, un agent entraîneur d'air, un retardateur de la prise du ciment, un inertant des argiles, des pigments, des colorants, des billes de verre creuses, des agents filmogènes, des agents hydrophobes ou dépolluants (comme par exemple des zéolithes ou du dioxyde de titane), des latex, des fibres organiques ou minérales, des additions minérales ou leurs mélanges.

De préférence, les additifs utilisés ne comprennent pas d'agent anti-mousse.

De préférence la mousse minérale selon l'invention comprend une addition minérale. Cette addition minérale peut être ajoutée au cours du procédé selon l'invention dans le coulis de ciment.

Les additions minérales sont, par exemple, des laitiers (par exemple tels que définis dans la norme NF EN 197-1 d'avril 2012, paragraphe 5.2.2), des pouzzolanes (par exemple telles que définies dans la norme NF EN 197-1 d'avril 2012, paragraphe 5.2.3), des cendres volantes (par exemple telles que définies dans la norme NF EN 197-1 d'avril 2012, paragraphe 5.2.4), des schistes calcinés (par exemple tels que définis dans la norme NF EN 197-1 d'avril 2012, paragraphe 5.2.5), des matériaux à base de carbonate de calcium, tel que du calcaire (par exemple tel que défini dans la norme NF EN 197-1 d'avril 2012, paragraphe 5.2.6), des fumées de silice (par exemple telles que définies dans la norme NF EN 197-1 d'avril 2012, paragraphe 5.2.7), des métakaolins ou leurs mélanges.

Une formulation selon l'invention permet des gains de temps et coûts considérables et vient à l'encontre des préjugés techniques selon lesquels l'utilisation d'additifs divers est nécessaire pour assurer la stabilité d'une mousse de ciment.

De préférence, la mousse minérale selon l'invention ne contient substantiellement pas de particules fines. Par l'expression «particule fine», on entend une population de particules donc le diamètre médian D50 est strictement inférieur à 2 µm. Le D50, également noté D_{V}50, correspond au 50^{ème} centile de la distribution en volume de taille des particules, c'est-à-dire que 50% du volume est constitué de particules dont la taille est inférieure au D50 et 50% de taille supérieure au D50.

Par le terme « substantiellement », on entend moins de 1%, avantageusement moins de 5%, exprimé en masse par rapport à la masse de ciment.

Selon un autre aspect de l'invention la mousse minérale selon l'invention ne contient pas un mélange de deux composés organiques formant respectivement un composé anionique et un composé cationique à longue chaines tels que décrits dans le brevet US 5,696,174.

Les ciments convenant peu ou pas pour la réalisation de l'invention sont les ciments d'aluminates de calcium ou leurs mélanges. Les ciments d'aluminates de calcium sont des ciments généralement comprenant une phase minéralogique C4A3$, CA, C12A7, C3A ou C11A7CaF₂ ou leurs mélanges, tel que par exemple, les Ciments Fondu®, les ciments alumineux, les ciments sulfoalumineux, les ciments d'aluminates de calcium conformes à la norme européenne NF EN 14647 de décembre 2006. De tels ciments sont caractérisés par une teneur en alumine (Al₂O₃) supérieure ou égale à 35% en masse.

Selon un premier mode de réalisation, le coulis de ciment peut être préparé en introduisant dans un malaxeur l'eau, les adjuvants (tels que par exemple l'agent réducteur d'eau), les sels de calcium et les sels de silicate. Le ciment, et éventuellement tous les autres matériaux sous forme de poudre, est ensuite introduit dans le malaxeur. La pâte obtenue est malaxée pour obtenir un coulis de ciment.

De préférence, le coulis de ciment est maintenu sous agitation, par exemple avec une pâle défloculeuse, la vitesse de la pâle pouvant varier de 1000 tr/min à 400 tr/min en fonction du volume de coulis pendant toute la durée du procédé de fabrication de la mousse minérale selon l'invention.

Selon un deuxième mode de réalisation, le coulis de ciment peut être préparé en introduisant une partie de l'eau ainsi que les adjuvants (tels que par exemple l'agent réducteur d'eau), les sels de calcium et les sels de silicate dans un malaxeur, puis le ciment, et ensuite les autres composés.

Selon un troisième mode de réalisation, le coulis de ciment peut être préparé en introduisant dans un malaxeur le ciment, et éventuellement tous les autres matériaux sous forme de poudre. Le ciment et les poudres peuvent être malaxés pour obtenir un mélange homogène. L'eau, les adjuvants (tels que par exemple l'agent réducteur d'eau), les sels de calcium et les sels de silicate sont ensuite introduits dans le malaxeur.

Selon un quatrième mode de réalisation, le coulis de ciment peut être généré de façon continue en ayant préalablement réalisé un mélange comprenant de l'eau avec les adjuvants (tels que par exemple l'agent reducteur d'eau), les sels de calcium et les sels de silicate.

La mousse aqueuse peut être réalisée en mettant en contact de l'eau et un agent moussant, puis en y introduisant un gaz. Ainsi la mousse aqueuse comprend de l'eau et un agent moussant. Ce gaz est de préférence de l'air. La quantité d'agent moussant est généralement comprise entre 0,25 et 5,00% en masse de matière sèche d'agent moussant par rapport à la masse d'eau, de préférence de 0,75% à 2,50%. L'introduction d'air peut se faire par agitation, par bullage ou par injection sous pression. De préférence, la mousse aqueuse peut être réalisée à l'aide d'un mousseur turbulent (lit de billes de verre par exemple). Ce type de mousseur permet d'introduire de l'air sous pression dans une solution aqueuse comprenant un agent moussant.

De préférence, la mousse aqueuse peut être générée de façon continue.

La mousse aqueuse générée a une taille de bulles d'air présentant un D50 qui est inférieur ou égal à 400 µm, de préférence comprise de 100 à 400 µm, plus préférentiellement compris de 150 à 300 µm. Le D50, également noté D_{V}50, correspond au 50^{ème} centile de la distribution en volume de taille des particules, c'est-à-dire que 50% du volume est constitué de particules dont la taille est inférieure au D50 et 50% de taille supérieure au D50.

De préférence la mousse aqueuse générée a une taille de bulles d'air présentant un D50 égal à 250 µm.

Le D50 des bulles est mesuré par rétrodiffusion. L'appareil utilisé est le Turbiscan® Online fourni par la société Formulaction. Les mesures par rétrodiffusion rendent possible l'estimation du D50 pour les bulles d'une mousse aqueuse, en connaissant la fraction volumique des bulles et l'indice de réfraction de la solution d'agent moussant.

De préférence l'agent moussant est un dérivé organique de protéines d'origine animale (par exemple, l'agent moussant nommé Propump26, poudre de kératine hydrolysée, vendue par la société Propump) ou végétale. Les agents moussants peuvent aussi être des tensio-actifs cationiques (par exemple cetyltrimethylammonium CTAB), anioniques, amphotériques (par exemple cocoamidopropyl bétaïne CAPB), ou encore non ioniques, ou leurs mélanges.

La mise en contact du coulis de ciment avec la mousse aqueuse pour obtenir un coulis de ciment moussé peut se faire par tout moyen et par exemple à l'aide d'un mélangeur statique.

Selon un mode de réalisation plus particulier, le coulis de ciment est pompé selon un débit volumique constant fonction de la composition de coulis de ciment moussé cible. Puis le coulis de ciment est mis en contact avec la mousse aqueuse déjà mise en circulation dans le circuit du procédé. Le coulis de ciment moussé selon l'invention est alors généré. Ce coulis de ciment moussé est mis en forme et laissé jusqu'à ce que la prise s'effectue.

Avantageusement, le procédé selon l'invention ne nécessite pas d'étape d'autoclave, ni d'étape de cure, ni d'étape de traitement thermique, par exemple à 60-80°C afin d'obtenir une mousse de ciment selon l'invention.

Un objet de l'invention, non-revendiqué, est également un coulis de ciment moussé, qui peut être obtenu à l'étape (ii) du procédé selon l'invention.

La présente invention a également pour objet une mousse minérale susceptible d'être obtenue par le procédé selon l'invention.

La mousse minérale selon l'invention peut être préfabriquée ou directement préparée sur un chantier en installant un système de moussage sur place.

La mousse minérale selon l'invention présente une densité à l'état sec comprise de 30 à 80 kg/m³. Il est à noter que la densité du coulis de ciment moussé (densité humide) diffère de la densité de la mousse minérale (densité de matériau durci).

De préférence, la mousse minérale selon l'invention présente une conductivité thermique comprise de 0,030 à 0,150 W/(m.K), de préférence de 0,030 à 0,060 W/(m.K) et plus préférentiellement de 0,030 à 0,055 W/(m.K), la marge d'erreur étant de ± 0,4 mW/(m.K).

Avantageusement, la mousse minérale selon l'invention présente une très bonne résistance au feu.

L'invention se rapporte également à un élément de construction comprenant une mousse minérale selon l'invention.

L'utilisation de la mousse minérale selon l'invention dans le domaine de la construction est également un objet de l'invention. Par exemple la mousse minérale selon l'invention peut être utilisée pour couler des murs, planchers, toitures pendant un chantier. Il est aussi envisagé de réaliser des éléments préfabriqués en usine de préfabrication à partir de la mousse selon l'invention tels que des blocs, des panneaux.

L'invention se rapporte également à l'utilisation de la mousse minérale selon l'invention comme matériau isolant, en particulier comme isolant thermique ou phonique.

Avantageusement, la mousse minérale selon l'invention permet de remplacer dans certains cas la laine de verre, la laine minérale ou les isolants en polystyrène et le polyuréthane.

De préférence, la mousse minérale selon l'invention présente donc une très faible conductivité thermique. Diminuer la conductivité thermique des matériaux de construction est hautement désirable puisqu'elle permet d'obtenir une économie d'énergie de chauffage dans les immeubles d'habitation ou de travail. De plus la mousse minérale selon l'invention permet d'obtenir de bonnes performances d'isolation sur de faibles épaisseurs et donc de préserver les surfaces et volumes habitables. La conductivité thermique (encore appelée lambda (λ)) est une grandeur physique caractérisant le comportement des matériaux lors du transfert de chaleur par conduction. La conductivité thermique représente la quantité de chaleur transférée par unité de surface et par une unité de temps sous un gradient de température. Dans le système international d'unités, la conductivité thermique est exprimée en watts par mètre kelvin (W/(m.K)). Les bétons classiques ou traditionnels ont une conductivité thermique entre 1,3 et 2,1 mesurée à 23°C et 50% d'humidité relative. La mousse minérale selon l'invention peut être choisie parmi les mousses ayant une conductivité thermique allant de 0,030 à 0,150 W/(m.K), de préférence de 0,030 à 0,060 W/(m.K) et plus préférentiellement de 0,030 à 0,055 W/(m.K), la marge d'erreur étant de ± 0,4 mW/(m.K).

Avantageusement, la mousse minérale selon l'invention peut être utilisée en comblement ou remplissage d'un espace vide ou creux d'un bâtiment, d'un mur, d'une cloison, d'un bloc de maçonnerie par exemple un parpaing, d'une brique, d'un sol ou d'un plafond. De tels matériaux ou éléments de constructions composites comprenant la mousse minérale selon l'invention sont également des objets de l'invention *per se.*

Avantageusement, la mousse minérale selon l'invention peut être utilisée comme revêtement de façade par exemple pour isoler un bâtiment par l'extérieur. Dans ce cas, la mousse minérale selon l'invention pourra être enduite d'un enduit de finition.

L'invention a également pour objet un dispositif comprenant la mousse minérale selon l'invention. La mousse peut être présente dans le dispositif comme matériau isolant. Le dispositif selon l'invention est avantageusement capable de résister ou diminuer les transferts d'air et thermohydriques, c'est-à-dire que cet élément possède une perméabilité contrôlée aux transferts d'air, d'eau sous forme de vapeur ou de liquide.

Le dispositif selon l'invention comprend de préférence au moins une ossature ou un élément structurel. Cette ossature peut être en béton (poteaux/poutres), métal (montant ou rail), en bois, en matériau plastique ou composite ou en matériau de synthèse. La mousse minérale selon l'invention peut également enrober une structure de type par exemple treillis (plastique, métallique).

La mousse minérale selon l'invention peut également être utilisée pour remplir les parties creuses de blocs à maçonner, par exemple des briques creuses ou des parpaings, la mousse pouvant être injectée à n'importe quelle étape de fabrication des blocs à maçonner.

Le dispositif selon l'invention peut être utilisé pour réaliser ou fabriquer un doublage, un système d'isolation, ou une cloison, par exemple une cloison séparative, une cloison de distribution ou une contre-cloison.

La mousse minérale selon l'invention pourra être coulée en vertical entre deux parois, choisies par exemple parmi des voiles béton, murs de briques, plaques de plâtre, plaque de bois, par exemple les panneaux de bois à lamelles minces orientées, ou panneaux fibrociment, le tout formant un dispositif.

L'invention sera mieux comprise à la lecture des exemples qui suivent qui ne présentent aucun caractère limitatif.

Les méthodes de mesures suivantes ont été utilisées :

### Méthode de granulométrie laser

Les courbes granulométriques des différentes poudres sont obtenues à partir d'un granulomètre laser de type Mastersizer 2000 (année 2008, série MAL1020429) vendu par la société Malvern.

La mesure s'effectue dans un milieu approprié (par exemple en milieu aqueux pour les particules non réactives, ou alcoolique pour les matériaux réactifs) afin de disperser les particules ; la taille des particules doit être comprise de 1 µm à 2 mm. La source lumineuse est constituée par un laser rouge He-Ne (632 nm) et une diode bleue (466 nm). Le modèle optique est celui de Fraunhofer, la matrice de calcul est de type polydisperse.

Une mesure de bruit de fond est d'abord effectuée avec une vitesse de pompe de 2000 tr/min, une vitesse d'agitateur de 800 tr/min et une mesure du bruit sur 10 s, en l'absence d'ultrasons. On vérifie alors que l'intensité lumineuse du laser est au moins égale à 80%, et que l'on obtient une courbe exponentielle décroissante pour le bruit de fond. Si ce n'est pas le cas, les lentilles de la cellule doivent être nettoyées.

On effectue ensuite une première mesure sur l'échantillon avec les paramètres suivants : vitesse de pompe de 2000 tr/min, vitesse d'agitateur de 800 tr/min, absence d'ultrasons, limite d'obscuration entre 10 et 20%. L'échantillon est introduit pour avoir une obscuration légèrement supérieure à 10%. Après stabilisation de l'obscuration, la mesure est effectuée avec une durée entre l'immersion et la mesure fixée à 10 s. La durée de mesure est de 30 s (30000 images de diffraction analysées). Dans le granulogramme obtenu, il faut tenir compte du fait qu'une partie de la population de la poudre peut être agglomérée.

On effectue ensuite une seconde mesure (sans vidanger la cuve) avec des ultrasons. La vitesse de pompe est portée à 2500 tr/min, l'agitation à 1000 tr/min, les ultrasons sont émis à 100% (30 watts). Ce régime est maintenu pendant 3 minutes, puis on revient aux paramètres initiaux : vitesse de pompe de 2000 tr/min, vitesse d'agitateur de 800 tr/min, absence d'ultrasons. Au bout de 10 s (pour évacuer les bulles d'air éventuelles), on effectue une mesure de 30 s (30 000 images analysées). Cette seconde mesure correspond à une poudre désagglomérée par dispersion ultrasonique.

Chaque mesure est répétée au moins deux fois pour vérifier la stabilité du résultat. L'appareil est étalonné avant chaque séance de travail au moyen d'un échantillon standard (silice C10 Sifraco) dont la courbe granulométrique est connue. Toutes les mesures présentées dans la description et les gammes annoncées correspondent aux valeurs obtenues avec ultrasons.

### Méthode de mesure de la surface spécifique BLAINE

La surface spécifique des différents matériaux est mesurée comme suit.

La méthode Blaine à 20°C avec une humidité relative ne dépassant pas 65% en utilisant un appareil Blaine Euromatest Sintco conforme avec la norme européenne EN 196-6.

Avant la mesure de la surface spécifique, les échantillons humides sont séchés dans une étuve jusqu'à l'obtention d'une masse constante à une température de 50 à 150°C (le produit séché est ensuite broyé pour obtenir une poudre dont la taille maximale de particules est inférieure ou égale à 80 µm).

### EXEMPLES DE REALISATION

Le procédé selon l'invention a été mis en pratique pour réaliser des mousses minérales selon l'invention B, D, F, H, J, L, N, O à partir de coulis de ciment de formules II, IV, VI, VIII et X. Des exemples comparatifs de mousses de ciments G, I, K, M obtenu en utilisant des coulis de ciment V, VII et IX ont également été réalisés de manière à mettre en évidence les aspects avantageux du procédé selon l'invention.

### Matériaux :

Les ciments utilisés sont des ciments Portland provenant de différentes cimenteries Lafarge identifiées par le nom du lieu où elles se trouvent comme précisé dans le tableau (I). Ces ciments sont des ciments de type standard. Les lettres « R » et « N » correspondent à la définition de la norme NF EN 197-1, version d'avril 2012.

Le superplastifiant utilisé est un mélange comprenant un polycarboxylate polyoxyde (PCP) provenant de la société Chryso sous le nom Chrysolab EPB530-017 et ne comprenant pas d'agent anti-mousse. L'extrait sec du Chrysolab EPB530-017 est de 48%, pourcentage en masse.

Le sel de calcium utilisé est un mélange de chlorure de calcium et de nitrate de calcium provenant de la société Chryso sous le nom ChrysoXel CBP. L'extrait sec du Chrysoxel CBP est 52%, pourcentage en masse.

Le sel de silicate utilisé est un silicate de soude provenant de la société Chryso sous le nom ChrysoJet RS38. L'extrait sec du ChrysoJet RS38 est 38%, pourcentage en masse.

Les agents moussants utilisés sont des dérivés de protéines animales et sont les suivants :
- Propump26 provenant de la société Propump, dont l'extrait sec est de 26 % ;
- MAPEAIR L/LA provenant de la société MAPEÏ, dont l'extrait sec est de 26%, pourcentage en masse.

L'eau est l'eau du robinet.

### Matériels utilisés :

### Malaxeur Rayneri:

- Un mélangeur Turbotest (MEXP-101, modèle Turbotest 33/300, n° série : 123861) fourni par la société Rayneri. Il s'agit d'un malaxeur à axe vertical.

### Pompes :

- Une pompe à vis excentrée Seepex™ de type MD 006-24 n° de commission 244920.
- Une pompe à vis excentrée Seepex™ de type MD 006-24 n° de commission 278702.

### Mousseur :

- Un mousseur composé d'un lit de billes de verre de type SB30 de diamètre compris entre 0,8 et 1,4mm entassées selon un tube de longueur 100mm et de diamètre 12mm.

### Mélangeur statique :

- Un mélangeur statique composé de 32 éléments hélicoïdaux de type Kenics de 19mm de diamètre référencé 16La632 chez ISOJET

Dans la suite des exemples, des mousses minérales ont été réalisées. Chaque coulis de ciment est référencé par un numéro de II à X et chaque mousse aqueuse porte un numéro de 1 ou 2. La mousse de ciment (ou mousse minérale selon l'invention) obtenue est une combinaison d'un de ces coulis de ciment avec une de ces mousses aqueuses.

### I. Réalisation de mousses minérales

### I.1 Réalisation d'un coulis de ciment

Les compositions chimiques des différents coulis de ciment utilisés pour réaliser l'invention sont présentées dans le tableau I. Les coulis ont été réalisés avec le malaxeur Rayneri Turbotest 33/300 par introduction préalable des composants liquides (eau, agent réducteur d'eau, sels de calcium et sels de silicate). Sous agitation (1000 tr/min), les solides (ciment et tous les matériaux sous forme de poudre) sont ajoutés progressivement. Le coulis a été ensuite malaxé deux minutes supplémentaires.

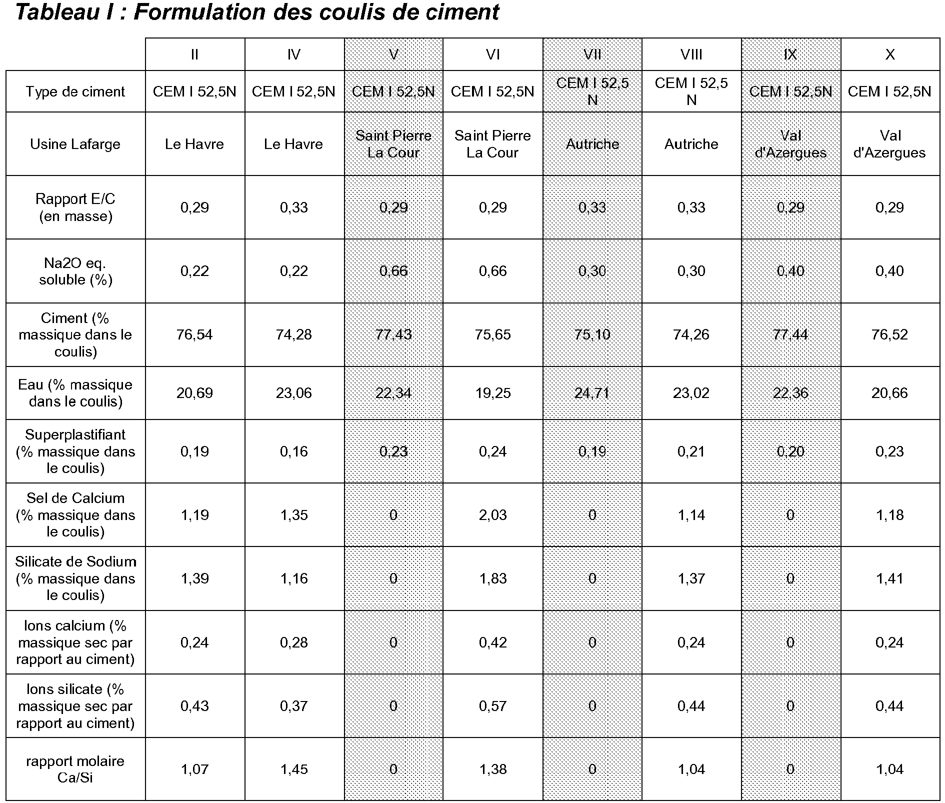

### I.2 Réalisation de la mousse aqueuse

Une solution aqueuse contenant l'agent moussant a été introduite dans une cuve. La composition de cette solution aqueuse d'agent moussant (notamment la concentration et la nature de l'agent moussant) est rapportée dans le tableau II. La solution d'agent moussant a été pompée par la pompe volumétrique à vis excentrée Seepex™ MD 006-24 (n° commission : 278702).

Cette solution d'agent moussant a été co-introduite à travers le lit de billes du mousseur avec de l'air sous pression (plage allant de 1 à 6 bars) à l'aide d'une jonction en T. La mousse aqueuse a été générée de façon continue au débit indiqué dans le tableau II.

**Tableau II : formulation des mousses aqueuses et débit**

| Numéro mousse aqueuse | 1 | 2 |
|---|---|---|
| Agent Moussant | Propump26 | MapeAIR L/LA |
| Concentration (% massique par rapport à l'eau de la mousse aqueuse) | 3,5 | 2,5 |
| Débit Air (L/min) | 8 | 8 |
| Débit Solution (L/min) | 0,418 | 0,410 |

### I.3 Réalisation d'un coulis de ciment moussé :

Le coulis de ciment, obtenu précédemment, a été conversé dans la cuve de malaxage sous agitation (400 tr/min) Le coulis a été pompé grâce à une pompe volumétrique à vis excentrée Seepex™ MD 006-24 (n° de commission : 244920).

Le coulis pompé et la mousse aqueuse précédente, générée en continu, ont été mis en contact dans le mélangeur statique. La mousse aqueuse est générée en respectant les débits précisés dans le tableau II.

Le coulis de ciment est pompé à un débit d'environ 0,285 L/min pour obtenir un coulis de ciment moussé avec une densité d'environ 110 kg/m³ humide (exemple B, D, F, G, H, I, J, K, L, M, N). Le coulis de ciment moussé est alors généré. Le volume de coulis de ciment utilisé est à cette densité d'environ 33 L/m³ et le volume de mousse aqueuse d'environ 967 L/m³.

Le coulis de ciment est pompé à un débit d'environ 0,160L/min pour obtenir un coulis de ciment moussé avec une densité d'environ 85kg/m3 humide (exemple O). Le coulis de ciment moussé est alors généré. Le volume de coulis de ciment utilisé est à cette densité d'environ 19 L/m³ et le volume de mousse aqueuse d'environ 981 L/m³.

### I.4 Obtention d'une mousse minérale

Le coulis de ciment moussé a été coulé dans des cubes en polystyrène de 10x10x10cm de côté et dans des colonnes cylindriques de 2,50 m de haut et 20 cm de diamètre. Trois cubes ont été réalisés pour chaque coulis moussé. Les cubes ont été démoulés à 1 jour puis conservés 7 jours à 100% d'humidité relative et 20°C. Les cubes ont ensuite été séchés à 45°C jusqu'à obtention d'une masse constante. Une colonne a été réalisée pour certains coulis moussés. Les colonnes ont été démoulées entre 3 et 7 jours puis découpées en tronçon de 25 cm de long. Les tronçons ont été séchés à 45°C jusqu'à obtention d'une masse constante.

### II. Analyse de la mousse minérale

### II.1 Stabilité de la mousse minérale

La stabilité des mousses a été mesurée simplement par inspection visuel des cubes générés avant démoulage. Une mousse a été décrite comme « stable » si le cube considéré a conservé une hauteur de 10cm après sa prise. Une mousse a été caractérisée comme « instable » si le cube considéré s'est affaissé au cours de sa prise. Chaque essai a été réalisé sur 3 cubes 10x10x10 cm. Les résultats montrent un comportement similaire entre les 3 cubes. Quand il y a lieu, les résultats exprimés sont la moyenne de ces 3 cubes.

Une colonne a été considérée comme stable lorsque l'écart de densité entre le tronçon du bas et le tronçon du haut de la colonne n'excède pas 5 kg/m³.

### II.2 Conductivité thermique des mousses minérales

La conductivité thermique a été mesurée à l'aide d'un appareil de mesure de la conductivité thermique : CT-mètre fourni par la société Alphis-ERE (Résistance 5Ω, fil sonde 50mm). La mesure a été effectuée sur des échantillons séchés à 45°C jusqu'à masse constante. L'échantillon a ensuite été coupé en deux morceaux égaux à l'aide d'une scie. La sonde de mesure a été placée entre les deux faces planes de ces deux moitiés d'échantillons (cotés sciés). La chaleur a été transmise de la source vers le thermocouple à travers le matériau entourant la sonde. L'élévation de température du thermocouple a été mesurée en fonction du temps et a permis de calculer la conductivité thermique de l'échantillon.

### II.3 Densité des mousses minérales

La densité humide des coulis de ciment moussés a été mesurée par pesée des cubes au moment du coulage.

La densité sèche des échantillons a été mesurée sur des échantillons séchés à 45°C jusqu'à masse constante, toujours par pesée des cubes.

### II.4 Résultats

Les résultats sont présentés dans le tableau III ci-dessous.

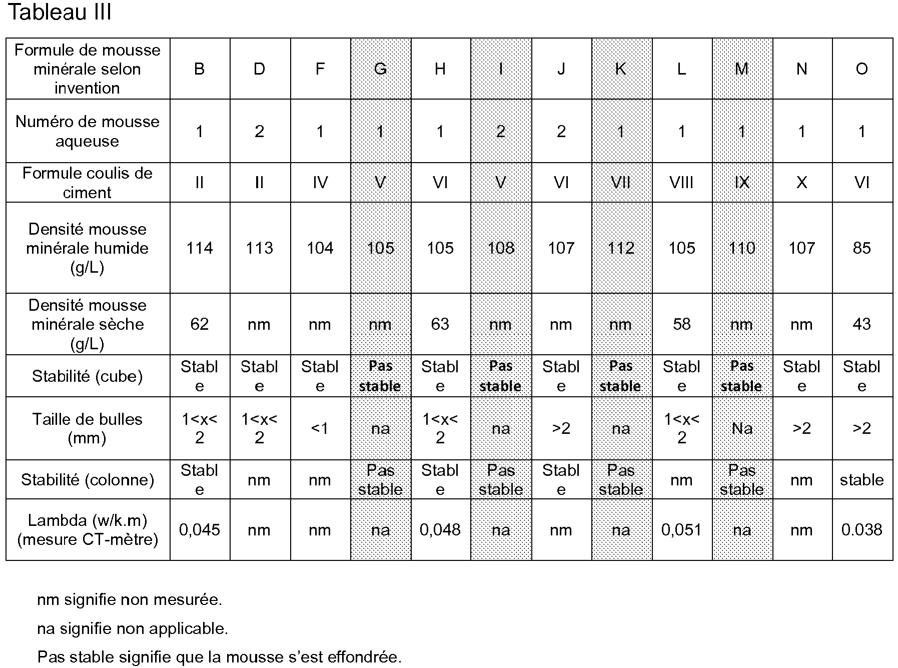

### II.5 Conclusions

Ces exemples permettent d'apprécier le rôle du rapport massique sel de calcium / sel de silicate dans la stabilité de la mousse minérale. Ainsi lorsque le rapport molaire de calcium / silicium est de 1,07, 1,45, 1,38 ou 1,04, la mousse est stable. En absence de sels de calcium soluble dans l'eau ou de sels de silicate soluble dans l'eau, la mousse est déstabilisée et s'effondre. On peut noter que pour les mousses minérales obtenues selon l'invention, la nature du ciment utilisé n'influe pas sur la stabilité de la mousse.

L'invention n'est pas limitée aux modes de réalisations présentées et d'autres modes de réalisation apparaîtront clairement à l'homme du métier.

## Revendications

1. Procédé de fabrication d'une mousse minérale comprenant les étapes suivantes :
(i) préparer indépendamment une mousse aqueuse et un coulis de ciment, le coulis de ciment comprenant de l'eau E, un ciment C, un agent réducteur d'eau, un sel de calcium soluble dans l'eau, un sel de silicate soluble dans l'eau, le rapport molaire calcium / silicium étant compris de 0,7 à 1,7 et le rapport massique E/C étant compris de 0,25 à 0,40, et étant entendu que la concentration en ions calcium est comprise entre 0,03 et 0,97%, pourcentage exprimé en masse par rapport à la masse de ciment C et que la concentration en ions silicate est comprise entre 0,04 et 1,67% pourcentage exprimé en masse par rapport à la masse de ciment C ;
(ii) mettre en contact le coulis de ciment obtenu avec la mousse aqueuse pour obtenir un coulis de ciment moussé ; et
(iii) mettre en forme le coulis de ciment moussé obtenu à l'étape (ii) et laisser la prise s'effectuer.

2. Procédé selon la revendication 1, dans lequel le rapport molaire calcium / silicium est compris de 0,8 à 1,5.

3. Procédé selon la revendication 1, dans lequel le rapport E/C est compris de 0,28 à 0,35, exprimé en masse.

4. Procédé selon l'une quelconque des revendications précédentes, dans lequel le ciment C est un ciment de type CEM I, CEM II, CEM III, CEM IV ou CEM V.

5. Procédé selon l'une quelconque des revendications précédentes, dans lequel le ciment présente une surface spécifique Blaine comprise de 3 000 à 10 000 cm²/g, préférentiellement de 3 500 à 6 000 cm²/g.

6. Procédé selon l'une quelconque des revendications précédentes, dans lequel le coulis de ciment comprend un agent réducteur d'eau du type plastifiant ou superplastifiant.

7. Procédé selon l'une quelconque des revendications précédentes, dans lequel la mousse minérale comprend une addition minérale.

8. Procédé selon l'une quelconque des revendications précédentes, dans lequel la mousse minérale ne contient substantiellement pas de particules fines.

9. Procédé selon l'une quelconque des revendications précédentes, dans lequel le sel de calcium soluble dans l'eau est choisi parmi le chlorure de calcium, le nitrate de calcium, le formate de calcium, l'acétate de calcium, le chlorate de calcium, le bromure de calcium, le lactate de calcium, le nitrite de calcium, le propionate de calcium, l'hydrogenocarbonate de calcium, l'iodure de calcium et leurs mélanges.

10. Procédé selon l'une quelconque des revendications précédentes, dans lequel le sel de silicate soluble dans l'eau est choisi parmi la famille des silicates de sodium, la famille des silicates de potassium, l'acide silicique et leurs mélanges.

11. Mousse minérale susceptible d'être obtenue par le procédé selon l'une quelconque des revendications 1 à 10, **caractérisée en ce qu'**elle présente une densité à l'état sec comprise de 30 à 80 kg/m³.

12. Mousse selon la revendication 11, **caractérisée en ce qu'**elle présente une conductivité thermique comprise de 0,030 à 0,150 W/(m.K).

13. Elément de construction comprenant une mousse minérale selon l'une des revendications 11 à 12.

14. Utilisation de la mousse minérale selon l'une des revendications 11 à 12 comme matériau isolant, en particulier comme isolant thermique ou phonique.

## Patentansprüche

1. Herstellungsverfahren eines mineralischen Schaums, umfassend die folgenden Schritte:
(i) Zubereiten eines wässerigen Schaums und eines Zementgusses unabhängig voneinander, wobei der Zementguss Wasser E, einen Zement C, ein Wasser-Reduktionsmittel, ein in Wasser lösliches Kalziumsalz, ein in Wasser lösliches Silikatsalz enthält, wobei das Molverhältnis Kalzium / Silizium zwischen 0,7 und 1,7 inbegriffen ist und das Masseverhältnis E/C zwischen 0,25 und 0,40 inbegriffen ist und es sich von selbst versteht, dass die Konzentration an Kalziumionen zwischen 0,03 und 0,97 % inbegriffen ist, wobei der Prozentsatz als Masse im Verhältnis zur Zementmasse C ausgedrückt wird und die Konzentration an Silikationen zwischen 0,04 und 1,67 % inbegriffen ist, wobei der Prozentsatz der Masse im Verhältnis zur Zementmasse C ausgedrückt wird;
(ii) Kontaktieren des erhaltenen Zementgusses mit dem wässerigen Schaum, um einen schaumigen Zementguss zu erhalten; und
(iii) Formen des in Schritt (ii) erhaltenen schaumigen Zementgusses und Aushärten lassen.

2. Verfahren gemäß Anspruch 1, bei dem das Molverhältnis Kalzium / Silizium zwischen 0,8 und 1,5 inbegriffen ist.

3. Verfahren gemäß Anspruch 1, bei dem das Verhältnis E / C in der Masse ausgedrückt zwischen 0,28 und 0,35 inbegriffen ist.

4. Verfahren gemäß irgendeinem der voranstehenden Ansprüche, bei dem der Zement C ein Zement vom Typ CEM I, CEM II, CEM III, CEM IV oder CEM V ist.

5. Verfahren gemäß irgendeinem der voranstehenden Ansprüche, bei dem der Zement eine spezifische Oberfläche nach Blaine aufweist, die zwischen 3.000 und 10.000 cm²/g, bevorzugt zwischen 3.500 und 6.000 cm²/g inbegriffen ist.

6. Verfahren gemäß irgendeinem der voranstehenden Ansprüche, bei dem der Zementguss ein Wasser-Reduktionsmittel vom Weichmachertyp oder Superweichmacher umfasst.

7. Verfahren gemäß irgendeinem der voranstehenden Ansprüche, bei dem der mineralische Schaum einen mineralischen Zuschlag umfasst.

8. Verfahren gemäß irgendeinem der voranstehenden Ansprüche, bei dem der mineralische Schaum im Wesentlichen keine Feinpartikel enthält.

9. Verfahren gemäß irgendeinem der voranstehenden Ansprüche, bei dem das in Wasser lösliche Kalziumsalz aus Kalziumchlorid, Kalziumnitrat, Kalziumformat, Kalziumacetat, Kalziumchlorat, Kalziumbromid, Kalziumlaktat, Kalziumnitrit, Kalziumpropionat, Kalzium-Hydrogenkarbonat, Kalziumiodid und deren Mischungen ausgewählt wird.

10. Verfahren gemäß irgendeinem der voranstehenden Ansprüche, bei dem das in Wasser lösliche Silikatsalz aus der Familie der Natriumsilikate, der Familie der Kaliumsilikate, Kieselsäure und deren Mischungen ausgewählt wird.

11. Mineralischer Schaum, der geeignet ist, durch das Verfahren gemäß irgendeinem der Ansprüche 1 bis 10 erhalten zu werden, **dadurch gekennzeichnet, dass** es eine Dichte aufweist, die im trockenen Zustand von 30 bis 80 kg/m³ inbegriffen ist.

12. Schaum gemäß Anspruch 11, **dadurch gekennzeichnet, dass** er eine thermische Leitfähigkeit aufweist, die zwischen 0,030 und 0,150 W/(m.K) inbegriffen ist.

13. Bauelement, umfassend einen mineralischen Schaum gemäß irgendeinem der Ansprüche 11 bis 12.

14. Verwendung eines mineralischen Schaums gemäß einem der Ansprüche 11 bis 12 als Dämmmaterial, insbesondere als Wärme- oder Schall-Dämmmaterial.

## Claims

1. Method for manufacturing a mineral foam comprising the following steps:
(i) separately preparing an aqueous foam and a cement slurry, the cement slurry comprising water W, a cement C, a water-reducing agent, a water-soluble calcium salt, a water-soluble silicate salt, with the calcium / silicon molar ratio being 0.7 to 1.7 and the W/C weight ratio being 0.25 to 0.40, and being understood that the concentration in calcium ions is 0.03 to 0.97%, expressed as a weight percent relative to the weight of cement C and that the concentration in silicate ions is comprised between 0.04 and 1.67% expressed as a weight percent relative to the weight of cement C;
(ii) putting the cement slurry obtained in contact with the aqueous foam to obtain a foamed cement slurry; and
(iii) shaping the foamed cement slurry obtained in step (ii) and allowing setting to occur.

2. Method according to claim 1, wherein the calcium / silicon molar ratio is 0.8 to 1.5.

3. Method according to claim 1, wherein the W/C ratio is 0.28 to 0.35, expressed by weight.

4. Method according to any preceding claim, wherein the cement C is a cement of the CEM I, CEM II, CEM III, CEM IV or CEM V type.

5. Method according to any preceding claim, wherein the cement has a Blaine specific surface area of 3,000 to 10,000 cm²/g, preferably from 3,500 to 6,000 cm²/g.

6. Method according to any preceding claim, wherein the cement slurry comprises a water-reducing agent of the plasticising or superplasticising type.

7. Method according to any preceding claim, wherein the mineral foam comprises a mineral addition.

8. Method according to any preceding claim, wherein the mineral foam contains substantially no fine particles.

9. Method according to any preceding claim, wherein the water-soluble calcium salt is selected from calcium chloride, calcium nitrate, calcium formate, calcium acetate, calcium chlorate, calcium bromide, calcium lactate, calcium nitrite, calcium propionate, calcium hydrogen carbonate, calcium iodide and mixtures thereof.

10. Method according to any preceding claim, wherein the water-soluble silicate salt is selected from the family of sodium silicates, the family of potassium silicates, silicic acid and mixtures thereof.

11. Mineral foam able to be obtained by the method according to any of claims 1 to 10, **characterised in that** it has a dry density of 30 to 80 kg/m³.

12. Foam according to claim 11, **characterised in that** it has a thermal conductivity of 0.030 to 0.150 W/(m.K).

13. Construction element comprising a mineral foam according to one of claims 11 to 12.

14. Usage of the mineral foam according to one of claims 11 to 12 as an insulating material, in particular as a thermal or sound insulator.
